# EUROPÄISCHE PATENTSCHRIFT

(11) **EP 2 070 979 B1**
(45) Veröffentlichungstag und Bekanntmachung des Hinweises auf die Patenterteilung: **28.10.2009**
(21) Anmeldenummer: 07291526.7
(22) Anmeldetag: 13.12.2007
(51) Int. Cl.: C08L 27/06, C08K 3/00, C08K 5/00, H01B 3/44, C08K 3/26, C08K 3/34, C08K 5/092

(54) **Mischung auf der Basis von Polyvinylchlorid**
Mixture based on polyvinyl chloride
Mélange à base de polychlorure de vinyle

(43) Veröffentlichungstag der Anmeldung: 17.06.2009
(73) Patentinhaber: Nexans, 75008 Paris (FR)
(72) Erfinder: Brix, Susanne, 90542 Eckental (DE); Fascella, Claudio, 91126 Schwabach (DE)
(74) Vertreter: Döring, Roger

(56) Entgegenhaltungen:
- EP-A- 0 625 546
- EP-A- 0 677 550

## Beschreibung

Die Erfindung bezieht sich auf die Verwendung einer Mischung auf der Basis von Polyvinylchlorid als Isoliermaterial für elektrische Leiter und Leitungen in der Automobiltechnik, die gemäß der Temperaturklasse T2 für eine Zeitdauer von 3000 Stunden bei Temperaturen von bis zu 105 °C beständig sind, welcher zumindest ein Weichmacher, Kreide und ein Stabilisator beigemengt sind.

Derartige Mischungen sind auf dem Markt erhältlich. Die daraus hergestellten Isoliermaterialien werden üblicherweise extrudiert und beispielsweise zur Isolierung von Leitern bzw. für Mäntel von Leitungen eingesetzt, die für die Automobiltechnik vorgesehen sind. Sie müssen dann gemäß der eingangs erwähnten Temperaturklasse T2 über einen Zeitraum von 3000 Stunden bis zu 105 °C beständig sein und den Anforderungen der von deutschen Automobilfirmen erstellten Norm LV 112 auf Dauer genügen. Diese betreffen neben anderen Charakteristiken auch das Alterungsverhalten und die Farbtreue von in der Automobiltechnik eingesetzten Isoliermaterialien. Bei bekannten Mischungen werden zur Erfüllung solcher Forderungen teure langkettige Phthalate als Weichmacher verwendet, wie beispielsweise Diundecylphthalat, oder Trimellitate.

Aus der EP 0 625 546 A2 geht ein stabilisiertes Polyvinylchlorid (PVC) hervor, welches sich in Form von Weichrezepturen unter anderem für Drahtummantelungen und für Kabelisolierungen eignet. Es kann als Plastisol unter anderem auch als Unterbodenschutz für Kraftfahrzeuge eingesetzt werden. Das thermisch stabilisierte PVC ist beispielsweise aus 100 Gew.-Teilen PVC, 49 Gew.-Teilen Weichmacher, 50 Gew.-Teilen Kreide, 1 Gew.-Teil Zeolith, 0,3 Gew.-Teilen Zinkstearat, 5 Gew.-Teilen einer EpoxyVerbindung sowie 0,5 Gew.-Teilen Antioxidantien zusammengesetzt.

Der Erfindung liegt die Aufgabe zugrunde, die eingangs geschilderte Mischung zur Verwendung als Isoliermaterial in der Automobiltechnik unter Beibehalt der vorgeschriebenen Eigenschaften preiswerter herstellen zu können.

Diese Aufgabe wird gemäß der Erfindung durch folgende Rezeptur gelöst:
100 Teile Polyvinylchlorid
25 bis 80 Teile Diisodecylphthalat als Weichmacher
10 bis 100 Teile Kreide
3 bis 10 Teile Stabilisator
0,1 bis 5 Teile mit Fettsäureestern beschichtetes, phosphorhaltiges Aluminiumsilikat.

Ein aus dieser Mischung hergestelltes Isoliermaterial genügt allen Anforderungen der Automobilindustrie bezüglich Alterungsbeständigkeit, Farbtreue und Temperaturfestigkeit. Es erfüllt außerdem alle in der Automobiltechnik gestellten elektrischen Anforderungen. Von wesentlicher Bedeutung ist die überraschende Tatsache, daß durch die Zugabe einer nur geringen Menge von mit Fettsäureestern beschichtetem, phosphorhaltigem Aluminiumsilikat zur Einhaltung der geforderten Eigenschaften auch das preiswerte Material Diisodecylphthalat als Weichmacher eingesetzt werden kann.

Ausführungsbeispiele des Erfindungsgegenstandes werden im folgenden erläutert.

Zur Herstellung der Mischung nach der Erfindung kann grundsätzlich jedes handelsübliche Suspensions-Polyvinylchlorid - im folgenden kurz "PVC" genannt - als Basismaterial verwendet werden. In bevorzugter Ausführungsform wird ein Suspensions-PVC mit einem K-Wert von 70 eingesetzt.

Um die gewünschten Eigenschaften des PVCs zu erreichen, werden demselben in vorgegebenen Mengen Stoffe beigemengt, wie Weichmacher, Kreide, Stabilisatoren, innere und äußere Gleitmittel, Farbpigmente, Verarbeitungshilfsmittel und je nach Anwendung möglicherweise weitere Stoffe in geringen Mengen sowie bei der hier vorliegenden Mischung das spezielle Aluminiumsilikat.

Auf die Mengen von Gleitmittel, Farbpigmenten und Verarbeitungsmitteln wird nicht weiter eingegangen, weil es für die Mischung nach der Erfindung nicht auf dieselben ankommt. Es wird nur kurz erwähnt, daß Gleitmittel dem PVC üblicherweise in einer Menge von 0,1 bis 3 Teilen bei 100 Teilen PVC beigemengt werden.

Mit den übrigen Komponenten wird eine Mischung beispielsweise so hergestellt, daß die Komponenten in einen Kneter oder Mischer eingefüllt und zu einer zusammenhängenden homogenen Masse aufbereitet werden, die anschließend granuliert wird. Das fertige, in Granulatform vorliegende Produkt kann in handelsüblichen Extrudern verarbeitet und als Isolierung auf elektrische Leitungen aufgebracht bzw. als Mantel für elektrische Leitungen jeweils zur Verwendung in der Automobiltechnik erzeugt werden.

Die Mischung besteht aus folgenden Komponenten:
100 Teile Polyvinylchlorid
25 bis 80 Teile Diisodecylphthalat als Weichmacher
10 bis 100 Teile Kreide
3 bis 10 Teile Stabilisator
0,1 bis 5 Teile mit Fettsäureestern beschichtetes, phosphorhaltiges Aluminiumsilikat.

Als Weichmacher ist also das preiswerte Material Diisodecylphthalat eingesetzt. Als Stabilisator können beispielsweise Magnesium-Aluminium-Zink-Verbindungen verwendet werden.

Von besonderem Vorteil ist, daß ein Aluminiumsilikat eingesetzt ist, das mit Fettsäureestern beschichtet und phosphorhaltig ist. Es kann außerdem noch Kalzium enthalten. Insbesondere durch den Einsatz dieses speziellen Aluminiumsilikats können die oben geschilderten Eigenschaften des PVC-Materials auch bei Einsatz des nicht so hochwertigen Weichmachers Diisodecylphthalat eingehalten werden.

In bevorzugter Ausführungsform besteht die Mischung aus folgenden Komponenten:
100 Teile Polyvinylchlorid
40 Teile Diisodecylphthalat als Weichmacher
37 Teile Kreide
7 Teile Stabilisator
1 Teil mit Fettsäureestern beschichtetes, phosphorhaltiges Aluminiumsilikat.

## Patentansprüche

1. Verwendung einer Mischung auf der Basis von Polyvinylchlorid als Isoliermaterial für elektrische Leiter und Leitungen in der Automobiltechnik, die gemäß der Temperaturklasse T2 für eine Zeitdauer von 3000 Stunden bei Temperaturen von bis zu 105 °C beständig sind, welcher zumindest ein Weichmacher, Kreide und ein Stabilisator beigemengt sind, mit folgender Rezeptur:
100 Teile Polyvinylchlorid
25 bis 80 Teile Diisodecylphthalat als Weichmacher
10 bis 100 Teile Kreide
3 bis 10 Teile Stabilisator
0,1 bis 5 Teile mit Fettsäureestern beschichtetes, phosphorhaltiges Aluminiumsilikat.

2. Verwendung einer Mischung nach Anspruch 1 mit folgender Rezeptur:
100 Teile Polyvinylchlorid
40 Teile Düsodecylphthalat als Weichmacher
37 Teile Kreide
7 Teile Stabilisator
1 Teil mit Fettsäureestern beschichtetes, phosphorhaltiges Aluminiumsilikat.

## Claims

1. Use of a mixture based on polyvinylchloride as insulating material for electrical conductors and lines in automobile engineering, these being resistant in accordance with the temperature class T2 for a period of 3000 hours at temperatures of up to 105°C, where at least one plasticizer, chalk and one stabilizer have been admixed with the said mixture, using the following formulation:
100 parts of polyvinyl chloride
from 25 to 80 parts of diisodecyl phthalate as plasticizer
from 10 to 100 parts of chalk
from 3 to 10 parts of stabilizer
from 0.1 to 5 parts of phosphorus-containing aluminium silicate coated with fatty acid esters.

2. Use of a mixture according to Claim 1 with the following formulation:
100 parts of polyvinyl chloride
40 parts of diisodecyl phthalate as plasticizer
37 parts of chalk
7 parts of stabilizer
1 part of phosphorus-containing aluminium silicate coated with fatty acid esters.

## Revendications

1. Utilisation d'un mélange à base de chlorure de polyvinyle en tant que matériau isolant pour des conducteurs et des lignes électriques dans l'ingénierie automobile, qui sont résistant à des températures allant jusqu'à 105°C conformément à la classe de température T2 pendant une période de 3000 heures, et auquel sont ajoutés un agent plastifiant, de la craie et un agent stabilisateur, avec la formulation suivante :
100 parties de chlorure de polyvinyle,
de 25 à 80 parties de phtalate de diisodécyle en tant qu'agent plastifiant,
de 10 à 100 parties de craie,
de 3 à 10 parties d'agent stabilisateur,
de 0,1 à 5 parties de silicate d'aluminium phosphoré, revêtu d'esters d'acides gras.

2. Utilisation d'un mélange selon la revendication 1 avec la formulation suivante :
100 parties de chlorure de polyvinyle,
40 parties de phtalate de diisodécyle en tant qu'agent plastifiant,
37 parties de craie,
7 parties d'agent stabilisateur,
1 partie de silicate d'aluminium phosphoré, revêtu d'esters d'acides gras.
